# EUROPEAN PATENT APPLICATION

(11) **EP 2 572 926 A1**
(43) Date of publication of application: **27.03.2013**
(21) Application number: 11783113.1
(22) Date of filing: 15.04.2011
(51) Int. Cl.: B60M 1/26, B60M 1/12

(54) **SYSTEM FOR CONTROLLING AND MANAGING THE MECHANICAL TENSION OF THE CATENARY WIRE IN RAILWAY INFRASTRUCTURES**

(30) Priority: 21.05.2010 ES 201030772
(71) Applicant: Proytecsa Security. S.L., 22500 Binefar (Huesca) (ES)
(72) Inventor: SALLÉN ROSELLÓ, César, E-22500 Binefar (Huesca) (ES); TORRES PUEO, Roberto, E-22500 Binefar (Huesca) (ES)
(74) Representative: Ungria López, Javier
(86) International application number: PCT/ES2011/070267
(87) International publication number: WO 2011/144781

(57) **Abstract**

The invention relates to a system for controlling and managing the mechanical tension of the catenary wire in rail infrastructures, the catenary being formed by a series of linked sections which are tensioned by counterweights and one of the ends of which is deviated in order to be wound around a pulley. The system comprises: an extensometer gauge (7) disposed in the section of catenary wire (Ia) deviated from the line; a box (9) with operation, management and communication electronics; an electrical cable (10) for connecting the extensometer gauge (7) to the operation, management and communication electronics; and a communication between the operation, management and communication electronics and a control centre (12) in order to ascertain the state of each catenary section in real-time, as well as the tension thereof so that action can be taken in the event of insufficient tension and so that the tension of the different sections of the catenary wire can be altered remotely from a control centre.

## Description

### OBJECT OF THE INVENTION

The present invention, as is expressed in the wording of the present specification, relates to a system for controlling and managing the mechanical tension of the catenary wire in railway infrastructures, being of the type of installations that are made up by a series of linked catenary sections joined together, whose main objective is to control permanently the mechanical tension of the catenary wire which supplies electrical power to the trains of railway infrastructures.

Moreover, the system has as an object to allow ascertaining the state of each catenary section in real-time from a control centre, i.e., without the need of a physical presence, which enables to take immediate action in consequence, thus representing a drastic reduction of maintenance costs.

Another object of the invention is to allow ascertaining the tension, in kilos, of each catenary section in order to act at the precise moment that, for whatever circumstance, the tension is not suitable.

In addition, another object of the invention is to modify remotely, from a control centre, the tension of the catenary wire of the different sections thereof.

### FIELD OF THE INVENTION

The present specification discloses a system for controlling and managing the mechanical tension of the catenary wire in railway infrastructures, which can be applied for the control and preventive maintenance of the different catenary sections that make up a railway line in all types of railway infrastructures.

### BACKGROUND OF THE INVENTION

Nowadays, the power lines supplying electricity to trains, the catenaries, use a method, simple and relatively efficient, to maintain a permanent state of mechanical tension, which enables keeping a more or less constant height of the power supply-lines relative to the plane of the rail tracks, in order to allow a constant pressure of the train pantograph with said power supply line.

The train pantograph itself thanks to the system of spring and damper thereof absorbs the small variations in height, due to the fall or catenary sagging in the central points between posts and the unevenness of the terrain.

While said unevenness are maintained within specified tolerances, the pantograph-catenary contact is ensured for the normal train running.

The continuous catenary line is made up by a series of sections according to an approximate length between 1,000 and 1,200 metres, wherein said sections are supported at one of their ends on a fixed post, while the other end thereof is deviated in order to be wound around a first pulley on the upper part of a post, whereas from a second pulley, having a larger diameter than the first pulley and associated to it, hang vertically plumbed some counterweights whose mass provides, due to the gravity effect, a desired tension to the catenary wire.

On the other hand, in the deviated catenary section an electrical insulation is incorporated.

This system, although it offers a more or less constant tension is subject to some disadvantages requiring periodical reviews and maintenance protocols to ensure the railway lines operation, and thus, since there is a lack of remote information about the state of each catenary section the only way to control the tension is by varying the suspended mass exercised by the counterweight.

All things considered, a failure in the catenary tension does not become apparent unless there is an on-site review or an incident takes place when a train passes by, causing severe inconveniences.

Thus, for instance, counterweights are used to handle and absorb the shrink and stretch length variations of the catenary sections due to temperature variations.

In this way, the regular maintenance implies an on-site physical presence for each tensioned section of the catenary wire, in order to find out the incident that has taken place.

Thus, the incidents that may take place and are not detected unless there is a physical presence on-site, are, for example, the misappropriation of counterweights, the malfunction of the pulley through which runs the counterweight cable or a catenary cut and, even, the misappropriation of the catenary itself, circumstance that is likely to take place when the line is being installed.

In this way, when the counterweights are missing the catenary looses tension and the malfunction of the pulley though which the counterweight cable runs can be the consequence of a jam in the rotation shaft.

Moreover, with the actual means the tension (in kilos), which the catenaries are subject to, is not known and there is no way of detecting any event as the trains pass by.

### DESCRIPTION OF THE INVENTION

The present specification discloses a system for controlling and managing the mechanical tension of the catenary wire in railway infrastructures, being of utility in all types of railways installations whose catenary is made up by a series of linked sections, wherein said sections, are deviated by one of the ends thereof in order to be wound around a first pulley and that they are tensioned by counterweights hanging from a second pulley, having a larger diameter, and having the same rotation shaft than the first pulley, in such a way that the system comprises:
- an extensometer gauge inserted in the section of the catenary wire that is deviated from the line and is driven up to the shaft of a geared motor in order to be wound around it;
- a box having an operation, management and communication electronics;
- an electrical cable for connecting the extensometer gauge to the operation, management and communication electronics, and;
- a communication between the operation, management and communication electronics and a control centre.

In this way, the extensometer gauge measures the tension of the catenary and communicates it to the operation and management electronics for its comparison, in order to determine if it is within the specified parameters.

In the control centre the state of each catenary section along the whole line is controlled, ascertaining the catenary section not having the appropriate mechanical tension, actuating the geared motor to wound/unwound the corresponding catenary section, in such a way that from the control centre itself the catenary tension can be regulated.

The electrical cable for connecting the extensometer gauge goes through a wheel for its winding, so it can adapt itself to the catenary wire variations in length.

All things considered, the aim is to know in real-time when the section of a catenary line has suffered an incident affecting the wire tension and also to be able to ascertain which particular section of the entire wire it involves, in addition of regulating remotely the tension thereof, which represents a significant advantage, since it reduces maintenance and management costs.

In order to complement the description that is going to be made below, and for a better understanding of the invention features, there are attached a set of planes, in whose figures, by way of illustration only and by no way of limitation, are represented the most characteristics details of the invention.

### BRIEF DESCRIPTION OF THE DESIGNS

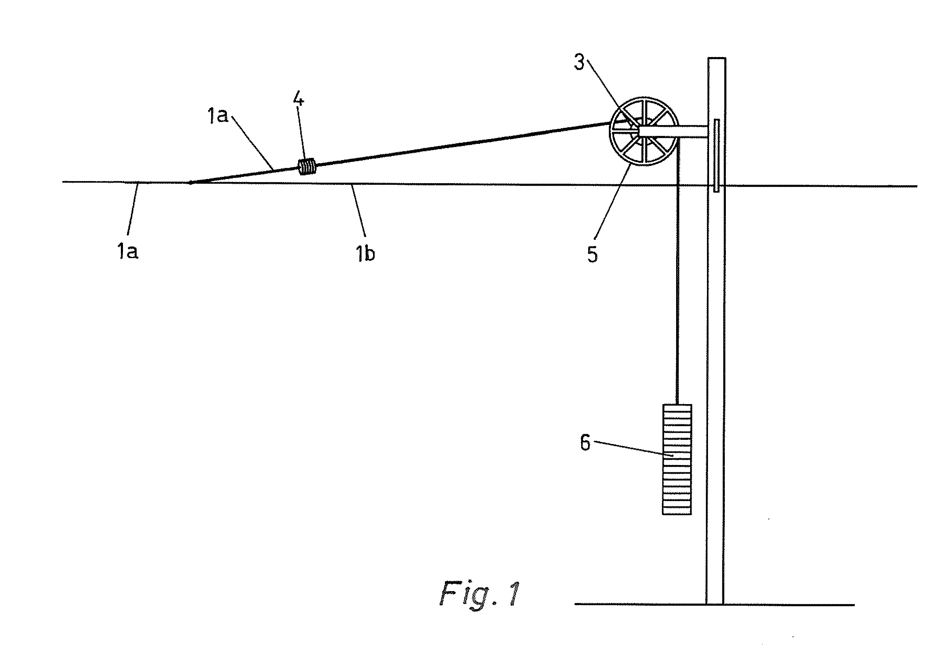

Figure 1 shows an elevation side view of the configuration of the end of a conventional catenary at its deviation towards a winding pulley, as well as the junction to the following catenary section and the mechanical tensing counterweights.

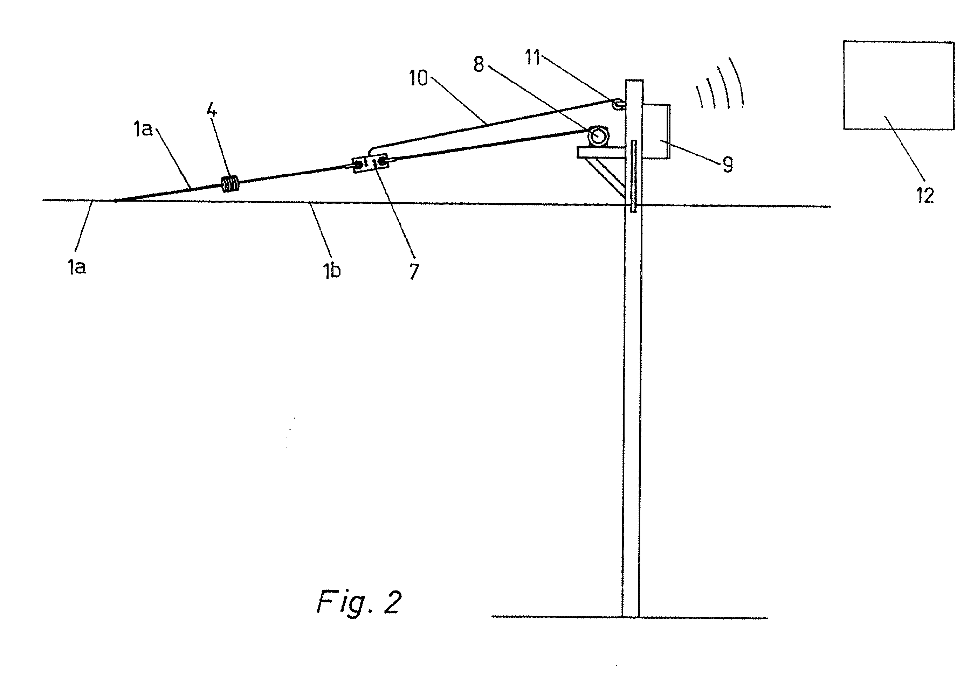

Figure 2 shows an elevation side view of the configuration object of the invention exhibiting the end of a catenary at its deviation towards the shaft of a gearing motor in order to be wound therein, as well as the junction to the following catenary section, an extensometer gauge, inserted therein, an electrical cable for connecting the extensometer gauge to a box containing an operation and communication electronics to a control centre.

### DESCRIPTION OF A PREFERRED EMBODIMENT

In view of the aforementioned figures and according to the numerals adopted we can observe, in the first place, that figure 1 shows a conventional structure in which the catenary sections 1 a and 1 b are joined together at point 2 where the end of the catenary section 1 a is deviated towards a first winding pulley 3 and presents in said deviation an electrical insulation 4.

On the other hand, the first pulley 3 is associated to a second pulley 5 having a larger diameter, in which a counterweights cable 6 is wound, and whose function is to bring about the mechanic tension of the catenary 1 a.

With a conventional structure as the described one, we have a mechanical drive in such a way that when the catenary 1 a suffers an alteration in its length, such as a shrink and a stretch, because of the temperature changes, the counterweights cause said modifications to be absorbed.

With this way of proceeding, it could happen that if the shaft of the pulley is blocked and it does not turn, the counterweights cannot actuate, and therefore the catenary is not duly tensioned and this incident remains unacknowledged unless there is a physical presence.

In addition, if sabotage takes place in the catenary, as could be a cut thereof or the misappropriation of a counterweight, the catenary is not duly tensioned and, likewise, said incident remains unacknowledged unless there is a physical presence.

Therefore, there is a high maintenance cost, since periodical reviews are necessary.

With the object of solving these disadvantages, the present specification describes a system for controlling and managing the mechanical tension of the catenary wire which supplies electrical power in railway infrastructures, whereby it allows maintaining permanently, at an operative level, the mechanical tension of the wire in the series of catenary sections making up the line and, in addition, it enables to ascertain any incident, at the very moment it takes place, that might affect the state of the catenary sections, obtaining a continuous maintenance without a physical presence.

Furthermore, by means of the proposed system the tension of each catenary section can be modified from the control centre itself.

In this way, the system being disclosed allows to operatively improve the regularity of the catenary tension in each section, the complete absence of maintenance and to ascertain remotely and in real-time the state of each catenary section in the development of railway infrastructures.

Also, by means of the system proposed by the invention, the suspended masses (counterweights) providing the necessary mechanical tension, are eliminated.

To do so, a system formed by an electrical geared motor 8 with a high mechanical gear ratio is positioned. Said system allows, by means of the winding of the wire around a shaft integral to the geared motor 8, to increase or decrease the catenary wire 1a tension by "winding-unwinding" the wire 1a in small variations.

Thus, the system measures permanently the mechanical tension of the wire 1 a, wherein an extensometer gauge 7 has been inserted, of each catenary section and by the suppression of the counterweights and the positioning of a geared motor 8 and a operation and management electronics 9, it enables to realize corrections in the mechanical tension of the wire 1a of each catenary section, making thus available a system completely automatic and autonomous, or maintenance-free.

In this way, the extensometer gauge 7 measures the catenary tension, and communicates it to the operation and management electronics 9 for its comparison, in order to determine if it is within the specified parameters.

In the control centre 12 the state of each catenary section along the entire line is controlled, ascertaining the catenary section that does not have the appropriate mechanical tension, and actuating the geared motor 8 to wind/unwind the corresponding catenary section 1 a, in such a way that from the control centre itself the catenary tension can be regulated.

The electrical cable 10 for connecting the extensometer gauge 7 goes through a wheel for its winding, so it can adapt itself to the catenary wire variations in length.

All things considered, the aim is to know in real-time when a section of a catenary line has suffered an incident affecting the wire 1 a tension, and also to ascertain which particular section of the entire wire it involves, in addition of regulating remotely the tension thereof, which represents a significant advantage, since it reduces maintenance and management costs.

Furthermore, the system records any detected anomaly when the trains pass by, recording the mechanical tension variations of the wire 1a.

Overall, the system allows:
◆ maintaining a constant mechanical tension of the wire 1a in each catenary section;
◆ effecting changes in said mechanical tension remotely, from a unified control centre, on the basis of the use conditions;
◆ transmitting any type of alarm regarding incidents of the catenary. To this end, any of the current technologies on data transmission available nowadays could be used.
◆ recording and obtaining data about the irregularities of said catenary as the trains pass by, given that the load cell will record the tension variations as the trains pass by, detecting failures, in the structure thereof, which allows anticipating an eventual situation before any incident takes place.

On the other hand, the system according to the invention acts automatically and not only measures, records and alerts, but also acts actively maintaining a constant mechanical tension and enables to vary said tension depending on the operative conditions, from a control centre.

An important advantage of the proposed system is that it can be mounted together with the catenary installation, which allows to control it from the very moment of its installation, in such a way that, if a sabotage where to take place on the catenary, as could be the cut thereof, in view of a tension failure an automatic alarm will be triggered in the control centre so a quick action could be undertaken.

This incident acquires great relevancy when the installation is being mounted, given that, precisely in those moments is where sabotages could take place, including the misappropriation of the catenaries, and having a control system that can be installed together with the installation itself and that can communicate with a control centre by any means, a vigilance will be available from the very moment of its installation, which provides a significant advantage.

In addition, the system may incorporate a device to measure the ambient temperature, by means of electronic sensors and calculations, which enables, knowing the elastic limits of the catenary wire and the necessary tensions for an optimal operating, to adjust permanently the tension of said wire without the need of costly corrections during seasonal changes.

Moreover, by means of the system object of the invention the following is possible:
◆ ascertaining remotely the mechanical state of each catenary section;
◆ given its low consumption, it can be maintained independently from an electrical power supply of the main network, by means of the positioning of electric accumulators and reduced photovoltaic plates;
◆ recording the variations of the mechanical tension of the catenary as the trains pass by, due to the pressure exerted by the pantograph thereof and to anticipate incidents due to irregularities in the catenary;
◆ eliminating conventional counterweights, which provide mechanical tension to the different catenary sections, and maintaining said tension within pre-established limits;
◆ eliminating the required periodical maintenance of the catenary counterweights due to adjustments of the elastic limits of the wire or to temperature variations;
◆ transmitting orders from a control centre so it can act by itself.

## Claims

1. System for controlling and managing the mechanical tension of the catenary wire in railway infrastructures, being of utility for all types of railway installations whose catenary is made up by a series of linked sections, wherein said sections, are deviated by one of the ends thereof in order to be wound around a first pulley for its tensioning, **characterized in that** the system comprises:
• an extensometer gauge (7) inserted in the catenary wire (1 a) section that is deviated from the line and is driven up to the shaft of a gauged motor (8) in order to be wound around it;
• a box (9) having an operation, management and communication electronics;
• an electrical cable (10) for connecting the extensometer gauge (7) to the operation, management and communication electronics, and;
• a communication between the operation, management and communication electronics and a control centre (12).

2. System for controlling the mechanical tension of the catenary wire in railway infrastructures, according to claim 1, **characterized in that** the extensometer gauge (7) measures the catenary tension, which is communicated to the operating and management electronics for its comparison.

3. System for controlling the mechanical tension of the catenary wire in railway infrastructures, according to claim 1, **characterized in that** in the control centre (12) the state of each catenary section (1a, 1b, ..) is controlled along the entire line, ascertaining the catenary section not having the appropriate mechanical tension, actuating the geared motor (8) for winding/unwinding the corresponding catenary section (1 a).

4. System for controlling the mechanical tension of the catenary wire in railway infrastructures, according to claim 1, **characterized in that** the electrical cable (8) for connecting the extensometer gauge (7) goes through a wheel (11) for its winding.
